# FASCICULE DE BREVET EUROPEEN

(11) **EP 1 030 233 B1**
(45) Date de publication et mention de la délivrance du brevet: **21.04.2004**
(21) Numéro de dépôt: 00490006.4
(22) Date de dépôt: 11.02.2000
(51) Int. Cl.: G05D 23/13

(54) **Dispositif d'équilibrage des pressions d'eau chaude et d'eau froide et robinet notamment thermostatique dudit dispositif d'équilibrage**
Vorrichtung zum Druckausgleich von kaltem und warmem Wasser und Armatur, insbesondere themostatische Armatur, mit einer solchen Ausgleichvorrichtung
Device for balancing the pressure of hot and cold water and a faucet, especially a thermostatic faucet, provided with such a balancing device

(30) Priorité: 16.02.1999 FR 9902037
(43) Date de publication de la demande: 23.08.2000
(73) Titulaire: WATTS EUROTHERM S.A., 80390 Fressenneville (FR)
(72) Inventeur: Bommelaer, Christian, 80460 Friaucourt (FR); Bongrand, Laurent, 36400 Verneuil S/Igneraie (FR)
(74) Mandataire: Hennion, Jean-Claude

(56) Documents cités:
- FR-A- 2 162 041
- GB-A- 2 003 582
- US-A- 3 724 480
- US-A- 5 161 737
- US-A- 5 341 987

## Description

L'invention se rapporte à un dispositif d'équilibrage des pressions d'eau chaude et eau froide dans un robinet à eau chaude sanitaire, tel un robinet thermostatique.

Elle se rapporte également au robinet notamment thermostatique pourvu du dit dispositif d'équilibrage.

Classiquement, un robinet dit thermostatique comprend :
- un corps délimitant localement une chambre dite de mélange alimentée, d'une part, au moins indirectement par un conduit d'arrivée d'eau froide et, d'autre part, au moins indirectement par un conduit d'arrivée d'eau chaude,
- une sortie d'eau mitigée ayant une température prédéterminée et
- un dispositif d'ajustement des débits d'eau froide et d'eau chaude pour obtenir une eau dite de sortie à la température appropriée, lequel dispositif comprend un élément qui, sensible à la température de l'eau dans la chambre de mélange, commande le déplacement d'un tiroir de distribution modifiant les sections de passage des entrées d'eau chaude et d'eau froide en fonction d'une consigne.

Ainsi, lorsque l'eau dans la chambre de mélange dépasse la température de consigne, l'élément sensible réduit la section de passage de l'arrivée d'eau chaude et, en même temps, augmente la section de passage de l'eau froide et, vice et versa, si la température est inférieure à la température de consigne.

L'élément sensible présente nécessairement une inertie pour éviter que le système soit constamment instable.

Le maintien de la température de l'eau en sortie du robinet dépend principalement des fluctuations des débits d'eau froide et d'eau chaude en entrée et donc de la stabilité des pressions eau froide et eau chaude qui influent nécessairement sur les débits.

On connaît un système d'équilibrage de pression monté en amont de la chambre de mélange d'un robinet thermostatique (FR-A-2.636.705) et dont l'objectif est d'atténuer les variations de pression.

Ce dispositif est constitué par un piston dont les extrémités sont creuses pour former une chambre dite d'eau froide par laquelle transite l'eau froide et une chambre dite d'eau chaude par laquelle transite l'eau chaude, ces chambres communicant en amont et en aval par des orifices radiaux.

Le piston agit comme un tiroir de distribution.

On connaît également un dispositif d'équilibrage (US-A-5.341.987 et US-A-3.724.480) des pressions d'eau chaude et d'eau froide dans un tel robinet comprenant, en amont d'un ensemble thermostatique :
- un équipage mobile constitué d'une membrane, dont le plan détermine le plan de symétrie de deux chambres et d'une tige de commande traversant la membrane en son centre et sur laquelle tige, est fixée la dite membrane,
- des clapets montés sur chacune des deux extrémités de la tige commune de commande coopérant avec des sièges,
- des moyens de guidage en translation de la tige de commande,
- montés sur chacune des sorties des chambres, un clapet anti-retour.

Un inconvénient de ce système est une faible sensibilité et également un risque non négligeable de coincement après une période de non utilisation.

Un des résultats que l'invention vise à obtenir est d'améliorer notamment la sécurité des robinets d'eau chaude sanitaires, tels les robinets thermostatiques.

A cet effet, l'invention a pour objet un dispositif d'équilibrage du type précité caractérisé en ce que les moyens de guidage sont situés à chacune des extrémités de la tige de commande et ont des surfaces de guidage réduites par rapport à la section du clapet et de la tige de manoeuvre.

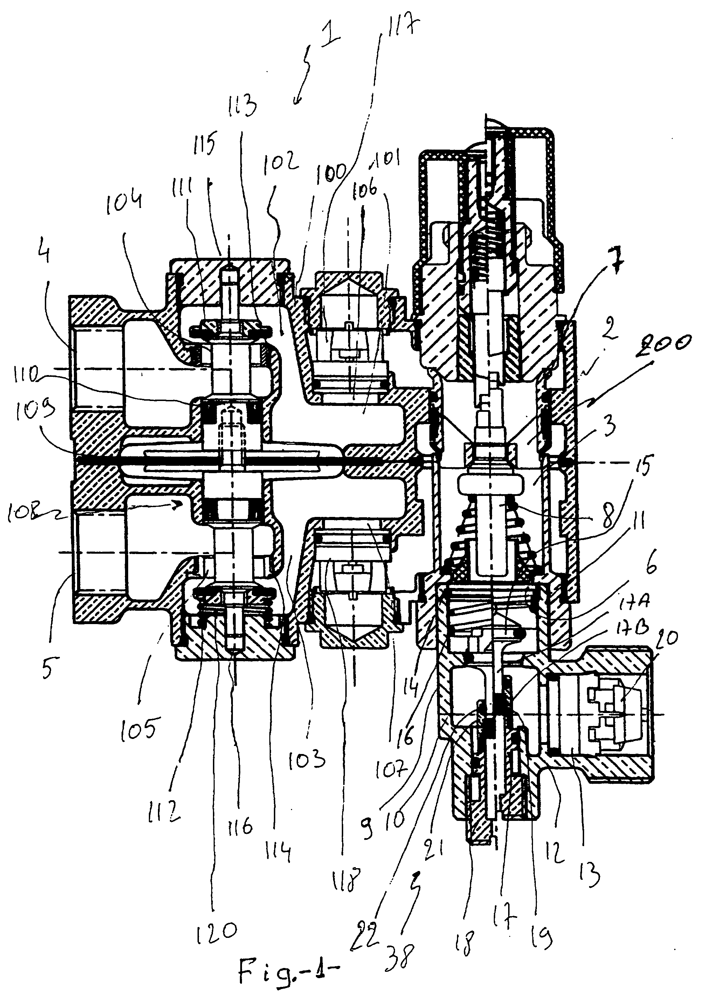

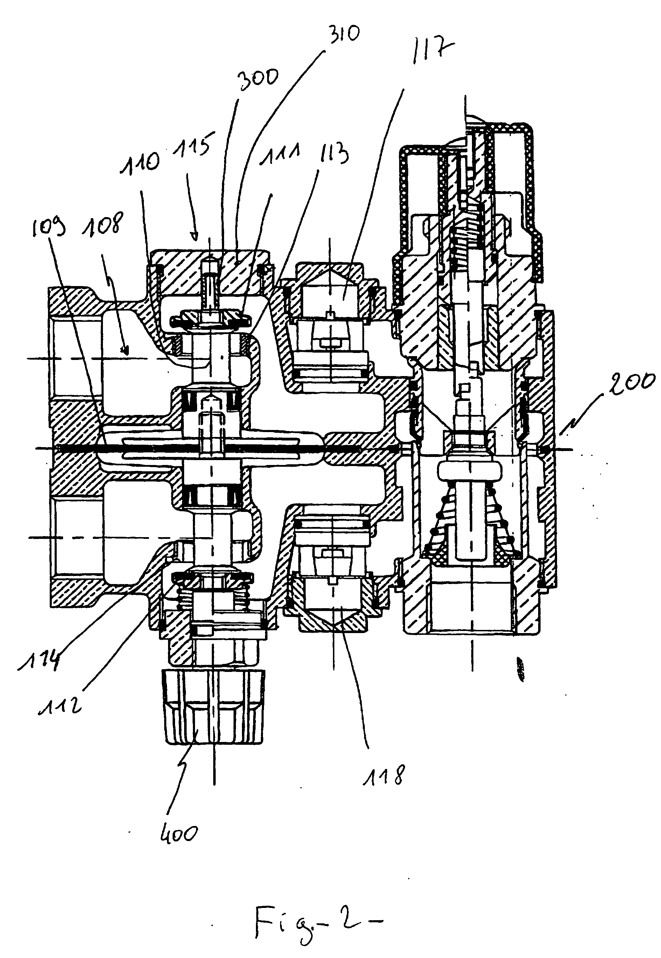

L'invention sera bien comprise à l'aide de la description ci-après faite à titre d'exemple non limitatif, en regard aux figures 1 et 2 ci-annexées qui représentent schématiquement une coupe axiale d'un dispositif d'équilibrage monté sur un robinet thermostatique.

En se reportant aux figures, on voit un robinet 1 d'eau chaude sanitaire tel un robinet thermostatique.

Un tel robinet 1 thermostatique comprend :
- un corps 2 délimitant localement une chambre 3 dite de mélange alimentée, d'une part, au moins indirectement par un conduit 4 d'arrivée d'eau froide et, d'autre part, au moins indirectement par un conduit 5 d'arrivée d'eau chaude,
- une sortie 6 d'eau mitigée ayant une température prédéterminée et
- un dispositif 7 d'ajustement des débits d'eau froide et d'eau chaude pour obtenir une eau dite de sortie à la température appropriée, lequel dispositif comprend un élément 8 qui, sensible à la température de l'eau dans la chambre de mélange, commande le déplacement d'un tiroir de distribution modifiant les sections de passage des entrées d'eau chaude et d'eau froide en fonction d'une consigne.

Ainsi, lorsque que l'eau dans la chambre de mélange dépasse la température de consigne, l'élément sensible réduit la section de passage de l'arrivée d'eau chaude et, en même temps, augmente la section de passage de l'eau froide et, vice et versa, si la température est inférieure à la température de consigne.

L'élément sensible présente nécessairement une inertie pour éviter que le système soit constamment instable.

Avantageusement, le robinet est pourvu en amont de la chambre de mélange et donc d'un ensemble thermostatique 200, d'un dispositif d'équilibrage pour atténuer les variations de pression de l'eau chaude et l'eau froide.

Classiquement, ce dispositif d'équilibrage comprend :
- une enveloppe 100 délimitant un logement 101 dans lequel sont délimitées deux chambres 102, 103 symétriques, dite chambre froide 102 pour celle alimentée en eau froide et chambre chaude 103 pour l'autre, chacune des chambres comprenant un orifice 104, 105 d'entrée et un orifice de sortie 106, 107,
- un équipage 108 mobile qui, soumis à la pression de l'eau contenue dans les chambres froide et chaude, modifie la section de passage des entrées 104 eau chaude et 105 eau froide.

Classiquement, le dispositif d'équilibrage comprend en outre :
- un équipage mobile 108 constitué d'une membrane 109, dont le plan détermine le plan de symétrie des chambres et d'une tige 110 de commande traversant la membrane 109 en son centre et sur laquelle tige, est fixée la dite membrane,
- des clapets 111, 112 montés sur chacune des deux extrémités de la tige commune de commande coopérant avec des sièges 113, 114,
- des moyens 115, 116 de guidage en translation de la tige de commande,
- montés sur chacune des sorties des chambres, un clapet 117, 118 anti-retour.

Selon une caractéristique de l'invention, les moyens de guidage 115, 116 sont situés à chacune des extrémités de la tige de commande et ont des surfaces de guidage réduites par rapport à la section du clapet et de la tige de manoeuvre.

Les moyens 115, 116 de guidage sont, par exemple, réalisés par un coulisseau de section réduite notamment par rapport à la section de la tige de commande, lequel coulisseau est solidaire de l'extrémité de cette tige de commande et il se déplace dans un alésage.

Cet alésage est réalisé dans le corps logeant le dispositif d'équilibrage.

Plus précisément, l'alésage est réalisé dans une pièce rapportée, telle un bouchon 310.

L'un de ces bouchons peut être équipé d'un poussoir dont le déplacement est obtenu par un organe 400 de manoeuvre.

Ce poussoir permet notamment d'agir sur l'une des extrémités de la tige de manoeuvre et d'appliquer ainsi l'un des clapets sur son siège pour fermer l'admission d'eau.

La combinaison de ces points techniques permet au système de fonctionner dans une position très proche de l'équilibre et de réagir très rapidement.

En effet, les forces de frottement de l'équipage mobile sont réduites notamment en raison des faibles surfaces de contact et du fait également du report du guidage en extrémité.

Le diamètre du coulisseau est au moins inférieur à la moitié du diamètre de la tige et tend plutôt vers un tiers du diamètre de la tige.

Pour améliorer ces performances, les moyens de guidage peuvent comprendre sur une des pièces en contact l'une de l'autre une bague 300 ou manchon en polymère évitant le contact métal sur métal qui, au cours du temps, s'oxyde et s'entartre.

Les clapets anti-retour montés en sortie de chambre et donc en amont de la chambre de mélange du robinet thermostatique évitent que la pression dans la chambre de mélange influe sur les pressions régnants dans les chambres chaude et froide.

Avantageusement, l'axe de déplacement de ces clapets anti-retour est parallèle à l'axe longitudinal de la tige de commande.

Cette orientation facilite le montage/démontage des clapets anti-retour et la compacité de l'ensemble.

Pour minimiser encore l'effet d'inertie de l'équipage et favoriser la sécurité, un organe 120 élastique sollicite l'équipage mobile dans le sens de la fermeture du clapet monté sur l'entrée d'eau chaude.

Il est également possible de prévoir un équilibrage de l'équipage mobile avec des ressorts tarés.

Le rapport des sections des clapets et surface de la membrane pourra être d'environ 15 à 20 ce qui améliore la sensibilité.

Les clapets 111, 112 montés sur les entrées seront munis de joints à lèvre.

La surface de ces clapets sera légèrement supérieure à la section de passage que ces clapets contrôlent de manière à créer une résultante favorisant la fermeture du clapet contribuant ainsi à une limitation du débit lors d'une augmentation de pression.

Selon une autre caractéristique, le robinet est en outre équipé en aval de la sortie 6 d'eau chaude mitigée, c'est à dire en sortie de l'ensemble thermostatique 200 d'un dispositif de sécurité obturant la sortie en réponse à une température excessive.

Le dispositif de sécurité 38 comprend :
- une enveloppe 9 délimitant un logement 10 traversant, de part en part, la dite enveloppe avec l'une 11 des deux extrémités 11, 12 du dit logement, dite extrémité amont 11, qui présente au moins indirectement des moyens de raccordement hydraulique avec la sortie d'un robinet d'eau chaude et, en amont de l'autre extrémité 12, un conduit 13 dit d'évacuation, d'une part, débouchant hors de l'enveloppe et, d'autre part, se raccordant hydrauliquement en un point intermédiaire aux deux extrémités du logement conférant à l'enveloppe la forme d'un Té,
- délimité dans l'alésage prés de son extrémité amont, un siège 14 de clapet 15, et
- monté dans le logement depuis l'extrémité amont :
   . un clapet 15 avec un organe 16 élastique le sollicitant vers sa position dite de fermeture en l'appliquant sur le siège 14 et
   . une tige 17 dite de manoeuvre du clapet, reliée à un dispositif 18 de commande apte à pousser le dit clapet vers la position dite ouverture en contrariant l'action de l'organe élastique précité, entre le clapet et le dispositif de commande, cette tige de manoeuvre comprenant localement un matériau 19 fusible qui, lorsqu'il est soumis à une température supérieure à une température prédéterminée, fond de sorte que la longueur de la tige de manoeuvre se réduit et induit ainsi la fermeture du clapet.

La tige 17 de manoeuvre du clapet est en deux pièces 17A, 17B :
- l'une 17A des pièces est solidaire du clapet et forme une queue de soupape qui s'étend selon l'axe longitudinal de l'alésage et
- l'autre pièce 17B vient en appui sur l'extrémité libre de la queue par l'intermédiaire du matériau 19 fusible.

Le matériau 19 fusible est logé dans une chemise 21 isolant le matériau fusible des variations fugaces de température.

Cette chemise 21 permet en outre d'utiliser des matériaux fusibles non alimentaires.

La queue du clapet s'engage partiellement dans cette chemise et un joint 22 torique disposé à l'entrée de la chemise 21 complète l'isolation du matériau fusible de l'eau.

Le conduit d'évacuation loge un clapet anti-retour 20.

## Revendications

1. Dispositif d'équilibrage des pressions d'eau chaude et eau froide dans un robinet à eau chaude sanitaire comprenant, en amont d'un ensemble (200) thermostatique :
- un équipage mobile (108) constitué d'une membrane (109), dont le plan détermine le plan de symétrie de deux chambres d'eau chaude et d'eau froide et d'une tige (110) de commande traversant la membrane (109) en son centre et sur laquelle tige est fixée la dite membrane,
- des clapets (111, 112) montés sur chacune des deux extrémités de la tige commune de commande coopérant avec des sièges (113, 114),
- des moyens (115, 116) de guidage en translation de la tige de commande,
- et das clapets (117, 118) anti-retour montés sur chacune des sorties des chambres,
ce dispositif étant **caractérisé en ce que** les moyens de guidage (115, 116) sont situés à chacune des extrémités de la tige de commande et ont des surfaces de guidage de section réduite par rapport à la section des clapets et montés sur chacune des deux extrémités de la tige de commande.

2. Dispositif selon la revendication 1 **caractérisé en ce que** les moyens de guidage sont réalisés par un coulisseau de section réduite se déplaçant dans un alésage réalisé dans le corps logeant le dispositif d'équilibrage.

3. Dispositif selon la revendication 2 **caractérisé en ce que** les moyens de guidage comprennent sur une des pièces en contact l'une de l'autre une bague (300) ou manchon en polymère évitant le contact métal sur métal.

4. Dispositif selon la revendication 1 **caractérisé en ce que** l'axe de déplacement des clapets anti-retour (117, 118) est parallèle à l'axe longitudinal de la tige de commande.

5. Robinet notamment thermostatique **caractérisé en ce qu'**il est pourvu d'un dispositif d'équilibrage selon l'une quelconque des revendications 1 à 4.

6. Robinet selon la revendication 5 comprenant :
- une enveloppe (100) délimitant un logement (101) dans lequel sont délimitées deux chambres (102, 103) symétriques, dite chambre froide (102) pour celle alimentée en eau froide et chambre chaude (103) pour l'autre, chacune des chambres comprenant un orifice (104, 105) d'entrée et un orifice de sortie (106, 107),
- un équipage (108) mobile qui, soumis à la pression de l'eau contenue dans les chambres froide et chaude, modifie la section de passage des entrées (104) eau chaude et (105) eau froide, et
- un ensemble (200) thermostatique,
ce robinet étant **caractérisé en ce qu'**il est équipé en aval de la sortie (6) d'eau mitigée d'un dispositif de sécurité obturant la sortie en réponse à une température excessive.

7. Robinet selon la revendication 6 **caractérisé en ce que** le dispositif de sécurité (38) comprend :
- une enveloppe (9) délimitant un logement (10) traversant, de part en part, la dite enveloppe avec l'une (11) des deux extrémités (11, 12) du dit logement, dite extrémité amont (11), qui présente au moins indirectement des moyens de raccordement hydraulique avec la sortie d'un robinet d'eau chaude et, en amont de l'autre extrémité (12), un conduit (13) dit d'évacuation, d'une part, débouchant hors de l'enveloppe et, d'autre part, se raccordant hydrauliquement en un point intermédiaire aux deux extrémités du logement conférant à l'enveloppe la forme d'un Té,
- délimité dans l'alésage près de son extrémité amont, un siège (14) de clapet (15), et
- monté dans le logement depuis l'extrémité amont :
. un clapet (15) avec un organe (16) élastique le sollicitant vers sa position dite de fermeture en l'appliquant sur le siège (14) et
. une tige (17) dite de manoeuvre du clapet, reliée à un dispositif (18) de commande apte à pousser le dit clapet vers la position dite ouverture en contrariant l'action de l'organe élastique précité, entre le clapet et le dispositif de commande, cette tige de manoeuvre comprenant localement un matériau (19) fusible qui, lorsqu'il est soumis à une température supérieure à une température prédéterminée, fond de sorte que la longueur de la tige de manoeuvre se réduit et induit ainsi la fermeture du clapet.

8. Robinet selon la revendication 7 **caractérisé en ce que** la tige (17) de manoeuvre du clapet est en deux pièces (17A, 17B) :
- l'une (17A) des pièces est solidaire du clapet et forme une queue de soupape qui s'étend selon l'axe longitudinal de l'alésage et
- l'autre pièce (17B) vient en appui sur l'extrémité libre de la queue par l'intermédiaire du matériau (19) fusible.

9. Robinet selon la revendication 8 **caractérisé en ce que** le matériau (19) fusible est logé dans une chemise (21) isolant le matériau fusible des variations fugaces de température.

10. Robinet selon la revendication 9 **caractérisé en ce que** la queue du clapet s'engage partiellement dans cette chemise et un joint (22) torique disposé à l'entrée de la chemise (21) complète l'isolation du matériau fusible de l'eau.

## Claims

1. Device for balancing the pressures of hot water and cold water comprising the following, upstream of a thermostatic assembly (200):
- a moving set (108) consisting of a diaphragm (109), the plane of which determines the plane of symmetry of two hot water and cold water chambers and a control rod (110) which goes through the centre of the diaphragm (109), the said diaphragm being fixed to that rod;
- flap valves (111, 112) fitted on each of the two ends of the common control rod working in conjunction with the seats (113, 114);
- means (115, 116) for guiding the linear movement of the control rod;
- and non-return valves (117, 118) fitted to each of the outlets from the chambers,
this device being **characterised in that** the guiding means (115, 116) are located at each of the ends of the control rod and have guide surfaces of reduced section compared with the section of the flap valves and fitted to each of the two ends of the control rod.

2. Device according to Claim 1, **characterised in that** the guiding means are made by a reduced section slide block which moves in a bore made in the body which houses the balancing device.

3. Device according to Claim 2, **characterised in that** the guiding means comprise on one of the parts in contact with each other a bush (300) or sleeve made from polymer to prevent metal-to-metal contact.

4. Device according to Claim 1, **characterised in that** the centreline of movement of the non-return valves (117, 118) is parallel with the longitudinal centreline of the control rod.

5. Faucet, especially a thermostatic faucet, c haracterised in that it is provided with a balancing device according to any of the Claims 1 to 4.

6. Faucet according to Claim 5 comprising:
- a casing (100) delineating a housing (101) in which two symmetrical chambers (102, 103) are delineated, the said cold chamber (102) for the one supplied with cold water and the hot chamber (103) for the other, each of the chambers comprising an inlet port (104, 105) and an outlet port (106, 107);
- a moving set (108) which, subject to the pressure of the water contained in the cold and hot chambers, changes the through section of the hot water (104) and cold water (105) inlets, and
- a thermostat unit (200),
this faucet being **characterised in that** it is fitted downstream of the mixed water outlet (6) with a safety device which blanks off the outlet in response to an excessive temperature.

7. Faucet according to Claim 6, **characterised in that** the safety device (38) comprises:
- a casing (9) delineating a housing (10) going through, on either side, the said casing with one (11) of the two ends (11, 12) of the said housing, the said upstream end (11) which has, at least indirectly, means for hydraulic connection with the outlet from a hot water faucet and, upstream of the other end (12), what is called a drainage line (13), on the one hand, coming through outside the casing and, on the other hand, connecting hydraulically at a point intermediate to the two ends of the housing, making the casing T-shaped.
- delineated in the bore near its upstream end, a valve (15) seat (14), and
- fitted in the housing from the upstream end:
- a valve (15) with an elastic part (16) stressing it towards what is called its closing position by applying it on the seat (14), and
- a rod (17) called the valve operating rod, connected to a control device (18) suitable for pushing the said valve towards what is called the opening position by contracting the action of the said elastic part, between the valve and the control device, this operating rod comprising locally a fusible material (19) which, when it is subjected to a temperature higher than a predetermined temperature, melts so that the length of the operating rod is reduced and thus induces the valve to close.

8. Faucet according to Claim 7, **characterised in that** the valve operating rod (17) is in two parts (17A, 17B):
- one (17A) of the parts is integral with the valve and forms a valve stem which extends along the longitudinal axis of the bore, and
- the other part (17B) is supported on the free end of the stem by means of the fusible material (19).

9. Faucet according to Claim 8, **characterised in that** the fusible material (19) is housed in a liner (21) isolating the fusible material from fleeting variations in temperature.

10. Faucet according to Claim 9, **characterised in that** the valve stem engages partly in this liner and an O-ring (22) arranged at the inlet of the liner (21) completes the isolation of the fusible material from the water.

## Patentansprüche

1. Vorrichtung zum Ausgleichen der Drucke von warmem Wasser und kaltem Wasser in einem Sanitär-Warmwasser-Hahn, die stromaufwärts einer thermostatischen Einheit (200) umfasst:
- ein bewegliches Organ (108), das besteht aus einer Membran (109), deren Ebene die Symmetrieebene der beiden Kammern für warmes Wasser und für kaltes Wasser festlegt, und einer Steuerstange (110), welche die Membran (109) in ihrem Zentrum durchquert und auf der die Membran fixiert ist,
- Absperrventile (111, 112), die auf jedem der beiden Enden der gemeinsamen Steuerstange montiert sind, die mit Ventilsitzen (113, 114) kooperieren,
- Führungseinrichtungen (115, 116) für die Steuerstange bei ihrer Verschiebung, und
- Rückschlagventile (117, 118), die an jedem der Ausgänge der Kammern angeordnet sind,
wobei diese Vorrichtung **dadurch gekennzeichnet ist, dass** die Führungseinrichtungen (115, 116) an jedem der Enden der Steuerstange angeordnet sind und Führungsoberflächen mit einem verminderten Querschnitt im Vergleich zu dem Querschnitt der auf jedem der beiden Enden der Steuerstange montierten Absperrventile aufweisen.

2. Vorrichtung nach Anspruch 1, **dadurch gekennzeichnet, dass** die Führungseinrichtungen die Form eines Schlittens mit einem verminderten Querschnitt haben, der in einer Bohrung verschiebbar ist, die in dem Körper vorgesehen ist, in dem die Druckausgleichsvorrichtung untergebracht ist.

3. Vorrichtung nach Anspruch 2, **dadurch gekennzeichnet, dass** die Führungseinrichtungen auf einem der Teile, die in Kontakt miteinander stehen, einen Ring (300) oder eine Hülse aus einem Polymer aufweisen, um einen Metall-Metall-Kontakt zu vermeiden.

4. Vorrichtung nach Anspruch 1, **dadurch gekennzeichnet, dass** die Verschiebungsachse der Rückschlagventile (117, 118) parallel zur Längsachse der Steuerstange verläuft.

5. Hahn, insbesondere thermostatischer Hahn, **dadurch gekennzeichnet, dass** er eine Ausgleichsvorrichtung nach einem der Ansprüche 1 bis 4 aufweist.

6. Hahn nach Anspruch 5, der umfasst:
- ein Gehäuse (100), das einen Raum (101) begrenzt, in dem zwei symmetrische Kammern (102, 103), untergebracht sind, eine so genannte kalte Kammer (102), der kaltes Wasser zugeführt wird, und eine so genannte warme Kammer (103), der warmes Wasser zugeführt wird, wobei jede der Kammern eine Eintrittsöffnung (104, 105) und eine Austrittsöffnung (106, 107) aufweist,
- ein bewegliches Organ (108), das, wenn es dem Druck des in den kalten und warmen Kammern enthaltenen Wassers ausgesetzt ist, den Durchtrittsquerschnitt der Eintrittsöffnungen (104) für warmes Wasser und (105) für kaltes Wasser modifiziert, und
- eine thermostatische Einheit (200),
wobei der Hahn **dadurch gekennzeichnet ist, dass** er stromabwärts von dem Ausgang (6) für Mischwasser mit einer Sicherheitseinrichtung ausgestattet ist, die den Ausgang bei einer übermäßig hohen Temperatur verschließt.

7. Hahn nach Anspruch 6, **dadurch gekennzeichnet, dass** die Sicherheitseinrichtung (38) umfasst:
- ein Gehäuse (9), das einen es vollständig durchquerenden Raum (10) begrenzt, wobei eines (11) der beiden Enden (11, 12) dieses Raums, das so genannte stromaufwärts gelegene Ende (11), das mindestens indirekt hydraulische Verbindungseinrichtungen mit dem Ausgang eines Warmwasserhahns und, stromaufwärts von dem anderen Ende (12), eine so genannte Evakuierungsleitung (13) aufweist, einerseits aus dem Gehäuse ins Freie mündet und andererseits an einem dazwischenliegenden Punkt in hydraulischer Verbindung steht mit den zwei Enden des Raumes, der dem Gehäuse die Form eines T gibt,
- einen Sitz (14) für das Absperrventil (15), der in der Bohrung nahe bei ihrem stromaufwärts gelegenen Ende abgegrenzt, und,
- angeordnet in dem Raum ab seinem Ende stromaufwärts,
• ein Absperrventil (15) mit einem elastischen Organ (16), das es in seine geschlossene Position bringt durch Andrücken an den Ventilsitz (14), und
• eine Bedienungsstange (17) für das Absperrventil, die mit einer Steuereinrichtung (18) verbunden und geeignet ist, das Absperrventil in die offene Position zu schieben entgegen der Wirkung des oben genannten elastischen Organs, zwischen dem Absperrventil und der Steuereinrichtung, wobei diese Bedienungsstange lokal ein schmelzbares Material (19) umfasst, das , wenn es einer Temperatur oberhalb einer vorgegebenen Temperatur ausgesetzt wird, schmilzt, sodass die Länge der Bedienungsstange abnimmt und damit das Schließen des Absperrventils bewirkt wird.

8. Hahn nach Anspruch 7, **dadurch gekennzeichnet, dass** die Bedienungsstange (17) des Absperrventils aus zwei Teilen (17A, 17B) besteht:
- wobei eines (17A) der Teile mit dem Absperrventil eine Einheit bildet und einen Ventilschaft darstellt, der sich entlang der Längsachse der Bohrung erstreckt, und
- das andere Teil (17B) auf dem freien Ende des Ventilschafts durch das schmelzbare Material (19) aufliegt.

9. Hahn nach Anspruch 8, **dadurch gekennzeichnet, dass** das schmelzbare Material (19) in einer Hülle (21) angeordnet ist, die das schmelzbare Material gegenüber abnehmenden Temperaturschwankungen isoliert.

10. Hahn nach Anspruch 9, **dadurch gekennzeichnet, dass** der Schaft des Absperrventils sich teilweise in diese Hülle hinein erstreckt und dass eine O-Ring-Dichtung (22), die am Eingang in die Hülle (21) angeordnet ist, die Isolierung des schmelzbaren Materials gegenüber dem Wasser vervollständigt.
